# EUROPEAN PATENT SPECIFICATION

(11) **EP 2 920 327 B1**
(45) Date of publication and mention of the grant of the patent: **04.01.2017**
(21) Application number: 12788497.1
(22) Date of filing: 14.11.2012
(51) Int. Cl.: C21C 7/076, C21C 7/06, C21C 7/072

(54) **METHOD FOR THE METALLURGICAL TREATMENT OF KILLED STEELS TO BE CAST CONTINUOUSLY, TO REDUCE SURFACE DEFECTS IN THE END PRODUCT**
VERFAHREN ZUR METALLURGISCHEN BEHANDLUNG VON BERUHIGTEM STAHL FÜR STRANGGIESSEN ZUR VERMINDERUNG VON OBERFLÄCHENDEFEKTEN BEI EINEM ENDPRODUKT
PROCÉDÉ DE TRAITEMENT MÉTALLURGIQUE D'ACIERS CALMÉS DEVANT ÊTRE COULÉS EN CONTINU POUR RÉDUIRE LES IRRÉGULARITÉS DE SURFACE DANS LE PRODUIT FINAL

(43) Date of publication of application: 23.09.2015
(73) Proprietor: ArcelorMittal, 1160 Luxembourg (LU)
(72) Inventor: KRÜNER, Alexandra, 15890 Eisenhüttenstadt (DE); GELLERT, Jens, 15230 Frankfurt/Oder (DE); BUDACH, Marina, 15890 Siehdichum (DE); DECKER, Nadine, 15337 Erkner (DE)
(74) Representative: Leinweber & Zimmermann
(86) International application number: PCT/EP2012/072580
(87) International publication number: WO 2014/075714

(56) References cited:
- EP-A1- 0 906 960
- EP-A1- 1 538 224
- US-A- 4 014 683

## Description

The present invention relates to a method for the metallurgical treatment of aluminium-killed or silicon-killed steels to be cast continuously, to reduce surface defects in the end product.

In the manufacture of products such as hot-rolled strip or cold-rolled strip, for example cold-rolled sheets with a typical thickness of 0.3 mm to 3.0 mm, steel is cast into slabs which then are further processed into the end product by hot rolling, optionally pickling, cold rolling and subsequent processing steps, such as annealing, temper rolling and/or coating. The continuous casting process to produce slabs or the like is preceded by a metallurgical treatment, in which crude steel is subjected to a ladle treatment in which the chemical compositions and the casting temperatures of the different steel qualities are adjusted. A treatment of this type, also called ladle metallurgy, includes, inter alia, desulphurisation, lowest decarburisation, deoxidation, decrease of the gases dissolved in the steel, such as hydrogen and nitrogen, addition of alloying agents, homogenisation of the chemical composition and temperature, separation and modification of non-metallic constituents, as well as slag conditioning.

It is this metallurgical treatment which gives the crude steel the desired characteristics.

The foundation for the quality of the end product is already laid during the metallurgical treatment, particularly as far as the appearance of surface defects on a hot-rolled strip or a cold-rolled strip is concerned. These are, inter alia, surface defects called "slivers" (so-called surface flaking) which contain non-metallic inclusions, sometimes accompanied by elements contained in the steel, such as alloying elements.

The solutions to avoid slivers known hitherto primarily concentrate on the existing defect-influencing possibilities during continuous casting that favour the generation of surface defects on hot-rolled/cold-rolled strip in form of slivers. The non-separation of alumina inclusions during the ladle metallurgical treatment is considered only. A complex and comprehensive analysis of defect development during the entire process of the steel production up to the continuous casting is not carried out. Consequently, most of the defects cannot be avoided effectively.

The non-metallic inclusions found in the slivers (not considered here: scale and casting powder inclusions) also consist of the accompanying elements contained in the steel (they are alloying elements).

Based on the analysis of these inclusions it was usually assumed that they were simple oxides, such as Al₂O₃, MnO, TiO₂, SiO₂, etc. However, it was often noticed in this respect that the size distribution and arrangement of these oxides do not correspond to the metallographic images that are usual for these inclusions.

Closer examination revealed that these are more complex structures. For example, in the case of aluminium-killed steel they are spinels, and in the case of silicon-killed steels they are orthosilicates. Spinels, for example MgO·Al₂O₃, are based in composition on the alloying element aluminium, while orthosilicates, for example 2FeO·SiO₂, can form in the presence of silicon.

These oxide complexes are already produced during the metallurgical steel treatment in the liquid phase and have the characteristic of growing under specific conditions. Large, reticular porous structures are formed which can be taken up by the slag only with difficulty and are therefore introduced into the slab cross section during the casting process. In this respect, if an upper size limit is exceeded, accumulations of the complex oxides in the vicinity of the surface can have an adverse effect on the forming characteristics of the steel. They are concentrated at the grain boundaries in the steel and reduce the cohesion of the crystals. During hot or cold rolling, material separations can occur on the strip surface, the above-mentioned slivers, which result in surface flaking on the strip surface and constitute irreversible defects.

Furthermore, during the growth of these complex structures, additional oxidisable elements, for example from the micro-alloying elements, can be included in the structures. Consequently, the metal-physical effect thereof is reduced and an increased proportion of the respective alloying elements must be added as required. Hitherto, this loss in yield has wrongly been interpreted solely as the melting loss of micro-alloying elements into the slag.

During the casting process the spinels or orthosilicates, which are formed in the liquid steel and cannot be separated into the slag layer, are mostly positioned in the strand cross section and in the vicinity of the surface according to the flow-technical conditions (among others, flow pattern) and are thus potential defect areas for the products produced therefrom in the subsequent processing stages of hot or cold rolling. The difficulty in defect detection is that the relevant defect areas (slivers) become partly visible after hot rolling on the hot strip surface, depending on the depth of the defect, and they appear predominantly after cold rolling only. It is also possible that the slivers are detected after forming (e.g. drawing or deep-drawing) of the cold strip. This causes considerable costs due to surface defects.

US 4,014,683 teaches that in ladle metallurgy aluminium is added in small quantities so as to be completely consumed in the deoxidation process, while an amount of carbon added compensates for the limited amount of aluminium added in the deoxidation process.

EP 1 538 224 A1 teaches a steel having few alumina clusters prepared by casting liquid steel deoxidized with Al via addition of rare-earth metals as suitable control thereof in the liquid steel.

EP 0 906 960 A1 discloses a titanium-killed steel sheet and method of manufacturing thereof.

The object of the present invention is to provide a process for the metallurgical treatment of aluminium-killed or silicon-killed steels to be cast continuously, which enables the reduction of surface defects, in particular slivers, on the end product, particularly on a hot- or cold-rolled strip.

This object is achieved by the process according to claim 1 for aluminium-killed steels and by the process according to claim 4 for silicon-killed steels.

Subclaims are directed to features of preferred embodiments of the processes according to the invention.

The fundamental idea of the present invention is to restrict the growth of the spinels or orthosilicates during the metallurgical treatment. As a result, the spinels or orthosilicates migrate onto the slag interfaces of the involved aggregates where they can either be taken up by the slag layer or are so small in size that they do not cause any surface defects (slivers).

For this purpose, the temperature/time profile of the metallurgical treatment is influenced, as are the slag composition and the basicity of the refractory materials of the metallurgical vessels.

In the following, the invention will be described in more detail with reference to the single figure and on the basis of the description of embodiments.

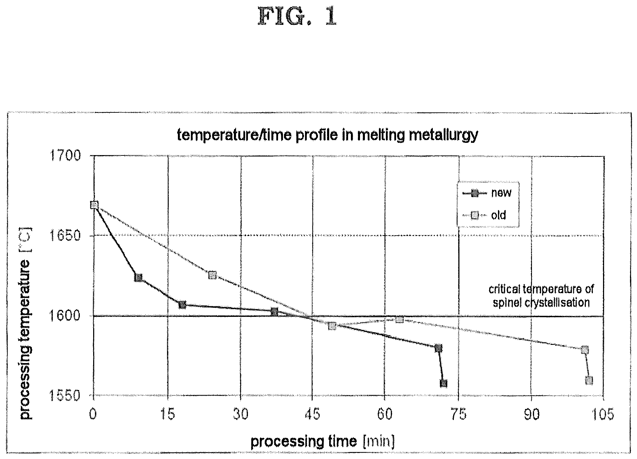

Fig. 1 shows the temperature/time profile of a metallurgical treatment according to the prior state of the art (old) and according to the present invention (new).

The non-metallic inclusions found in the slivers (not considered here: scale and casting powder inclusions) also consist of the accompanying elements contained in the steel (they are alloying elements).

On closer examination, it becomes clear that these are complex structures, such as spinels and orthosilicates.

### 1. Al-killed steels

Spinels (for example MgO•Al₂O₃) are based in composition on the alloying element aluminium and they can include oxides of further elements, such as titanium, manganese and iron, in their structure. Spinels are formed during the alloying process in the liquid steel and are liquid above a temperature of 1600 °C. As a liquid, they do not yet lead to the described surface defects.

Below a temperature of 1600 °C, a temperature-dependent equilibrium results between the liquid phase and the solid phase of the spinel, only the spinels which are precipitated from the liquid phase promote the formation of surface defects. The time between the beginning of the ladle-metallurgical treatment and the casting of the steel as well as the temperature profile during this process determine the growth of the spinels. The basicity of the oxides in the steel also influences spinel growth.

The elements contained in the steel show this oxidation behaviour:

| basic | | | | | neutral/ambivalent | | | | acidic | |
|---|---|---|---|---|---|---|---|---|---|---|
| Na₂O | CaO | MnO | FeO | MgO | Cr₂O₃ | Fe₂O₃ | Al₂O₃ | TiO₂ | SiO₂ | P₂O₅ |

The aluminium oxide contained in the spinel has an amphoteric reactivity. This means that in a basic environment the spinel reacts in an acidic manner, and in an acidic environment it reacts in a basic manner. As a result of this, an acidic reaction results in spinel growth, i.e. in the formation of ever greater complex oxide networks, and a basic reaction results in the disintegration of the spinels and thus in the restriction of spinel size. This mechanism does not only work in the molten steel, but there are also interactions between the spinels and the refractory materials of the metallurgical vessels and aggregates, and the slags located on the steel surface.

Reaction of the spinels with the refractory materials:
On contact with a basic refractory surface, the spinel reacts in an acidic manner and can grow.
On contact with an acidic refractory surface, the spinel reacts in a basic manner and can disintegrate.

The difference between the basicity of the oxides in the steel and in the refractory material, which take part in the reaction, determines the amount of spinel growth and spinel disintegration respectively, and thus also determines the potential for the development of slivers.

Reaction of the spinels with the slags:
On contact with a basic slag, the spinel reacts in an acidic manner and can grow due to the uptake of O²⁻ ions.
On contact with an acidic slag, the spinel reacts in a basic manner and can disintegrate into simple oxides due to the release of O²⁻ ions.

The uptake (separation) of the non-metallic inclusions (spinels) into the slags is also defined by the slag composition and by the contact time thereof with the liquid steel. High oxide concentrations in the slag and/or short contact times reduce the separation quota of the spinels.

According to the invention the object is achieved by the adjustment of the tapping temperature in such a way that the liquid steel remains as long as possible within a temperature range above 1600 °C during the ladle metallurgical treatment. Furthermore care must be taken in the further process management to ensure that the influx of oxygen is subsequently prevented. Aluminium to bind oxygen is to be added within a temperature range above 1600 °C to avoid the premature development of the solid spinel phase. As the next technological measure, it is necessary to minimise the treatment time between the end of tapping and the start of casting. This reduces the loss of temperature and the time for the growth of the spinels. In this phase, it is particularly important to ensure that the addition of aluminium and the influx of oxygen are restricted to such an extent that the new formation of spinels is minimised.

A suitable choice of the refractory materials used in the metallurgical vessels and aggregates can restrict the growth of the spinels and even reduce the size thereof. In this case, the oxides contained in the materials must preferably have a basicity which is less than the basicity of the oxides in the steel to be cast. Changes in the basicity of the refractory materials from one vessel to another are to be avoided if possible.

The third measure in the complex optimisation of the steel production process is the adaptation of the different slag compositions. The basicity of these slags must also be less than that of the oxides contained in the steel. The concentration of the oxides at the steel/slag interface, such as TiO₂ and MgO as spinel constituents, must also be less than that of the oxides contained in the steel, to ensure an effective uptake into the slag. The slag has to be partly or completely renewed as required, to maintain the concentration-dependent impetus of the mass transfer.

If the spinels formed in the liquid steel exceed a critical size for the respective metallurgical vessel or aggregate, for example ladle, tundish or mould, and for the usual process run, the separation thereof into the corresponding slags is reduced.

If all the measures are implemented according to the invention, the "sliver" surface defect resulting from the metallurgical treatment can be restricted to a minimum.

When the process according to the invention is used, the spinels can be restricted
a) in number and amount and
b) in growth and size
to such an extent that they do not produce surface defects.

A further effect according to the invention is the prevention of clogging in the whole area of the submerged entry nozzle (SEN) being in contact with the liquid steel if, for example, a SEN material is used which has a basicity similar to that of the oxides contained in the steel.

### 2. Si-killed steels

Orthosilicates (for example 2FeO•SiO₂) are based in composition on the alloying element silicon and can include oxides of further elements, such as aluminium, manganese and iron, in their structure. During the alloying process orthosilicates are formed in the liquid steel above a temperature of 1200 °C and are thus liquid until solidification after casting. The concentration of silicon and of dissolved oxygen at the start of the ladle treatment defines the total amount of orthosilicates which are generated and which can form glassy, long-chain SiO₂ networks in the subsequent process run between the end of tapping and steel casting. Since, unlike spinels, orthosilicates can only be stopped in growth but cannot disintegrate in terms of size, the oxygen potential present at the time of alloying is definitive for the total amount of 2FeO•SiO₂ which forms. For this reason, it is necessary according to the invention to reduce the oxygen content by other deoxidants (such as carbon and aluminium). As a result of using aluminium, preferably, on the one hand the oxygen can be bound, and on the other hand during the subsequent addition of silicon the spinel which has been produced can disintegrate again so that it does not lead to additional surface defects.

The silicon oxide contained in the orthosilicates exhibits an acidic reaction behaviour which provokes orthosilicate growth upon contact with basic refractory materials and slags. In an acidic environment, the growth can merely be stopped, but the size of the complex orthosilicates cannot be reduced by disintegration.

In addition to the quantity of orthosilicates present after alloying with silicon, the difference between the basicity of the oxides in the steel and in the refractory material, taking part in the reaction, determines orthosilicate growth and thus also the potential for the formation of slivers.

According to the invention the object is achieved by the partial or complete bonding of dissolved oxygen in the liquid steel due to the addition of a suitable deoxidant, preferably aluminium, after tapping. Thereafter, the silicon-containing alloying agent is added, whereby the spinels formed up until then disintegrate again into simple oxides due to the change in the basicity of the oxides in the steel from basic to acidic, and consequently remain below a size which is critical for the development of slivers.

The quantity of orthosilicates which can potentially form and grow is subsequently restricted by this measure. It is also necessary to prevent the further influx of oxygen to the liquid steel and to minimise the time between the end of tapping and the start of casting.

The second step involves the adaptation of the refractory materials to the basicity of the oxides present in the steel. To stop the growth of the orthosilicates, acidic refractory materials are to be used in the entire process.

Thirdly, it is necessary to adapt the different slag compositions to the basicity of the silicon oxide dissolved in the steel. For this reason, acidic slags are to be used. The concentration gradient of the melt/slag reaction has to be of a suitable magnitude to ensure an effective uptake into the slag. For this, the saturated slag has to be partly or completely replaced if necessary.

If the orthosilicates formed in the liquid steel exceed a critical size for the respective metallurgical vessel or aggregate, for example ladle, tundish or mould, and for the usual process run, the separation thereof into the corresponding slags is reduced.

### 3. Example of Al-killed steels

An Al-killed, Si-free IF steel (standard analysis: C = 0.002 % Mn = 0.1 % Al = 0.04 % Ti = 0.05 %) is used as an example.

As described above, the spinel growth and thereby the likelihood of the development of slivers is increased the longer the heat is metallurgically treated, in particular at temperatures < 1600 °C [J.H. Park, Met. Mater. Int., Vol. 16, No. 6 (2010)]. Since the casting temperature for this example must be approximately 1580 °C, it is impossible to prevent the temperature from falling below 1600 °C at the end of the treatment. However, the time should be kept as short as possible. Fig. 1 shows the T-t profile of two heats, one of which has an optimum T profile (new) and the other an unfavourable profile (old). The heats have a significantly different sliver rate. In the old process, 37.5 % of the slabs/strips had sliver formation, and with the new process there was 0 % sliver formation.

In addition to the temperature, the basicity also has an important influence on the spinel formation and growth rate, because spinels react amphoterically. As described above, an acidic environment reduces spinel formation and can even lead to a decrease in spinel size. Spinel growth in the presence of basic MgO (O²⁻ migration) is described, for example, in S.A. Nightingale, BJ Monaghan, Metallurgical and Materials Transactions B, Vol. 39B (2008).

In the steel/slag/refractory system described here, the term "basicity" relates to O²⁻ absorption and release reactions (optical basicity) [O. Ivanov, Metallurgische Grundlagen zur Optimierung von Hochofenschlacken mit Bezug auf die Alkalikapazität, Dissertation 2002].

### Example:

| | |
|---|---|
| SiO₂ + 2O²⁻ → SiO₄⁴⁻ (acidic reaction) | O²⁻ absorption |
| CaO → Ca²⁺ + 2O²⁻ (basic reaction) | O²⁻ release |

Therefore, the objective should be to keep the optical basicity of the oxidic constituents which come into contact with the steel (refractory materials and slags) as low as possible.

**Table 1: Composition and optical basicity of the refractory constituents of the treatment aggregates, calculated according to Ivanov**

| **Aggregate** | **Method** | **SiO₂ [wt%]** | **Al₂O₃ [wt%]** | **CaO [wt%]** | **MgO [wt%]** | **Optical** | **Optical basicity** |
|---|---|---|---|---|---|---|---|
| **Ladle** | Old | 0.7 | 0.7 | 1.9 | 96.2 | | **0.78** |
| **refractory** | New | 6.0 | 2.0 | 3.0 | 85.0 | | **0.76** |
| **RH** | Old | 4.6 | 2.0 | 3.0 | 85.0 | | **0.76** |
| **refractory** | New | 19.0 | 2.0 | 3.0 | 72.0 | | **0.71** |
| **Tundish** | Old | 31.0 | 1.5 | 1.5 | 60.0 | | **0.66** |
| **refractory** | New | 36.0 | 1.5 | 1.5 | 55.0 | | **0.64** |

**Table 2: Composition and optical basicity of the steel slags during the treatment, calculated according to Ivanov**

| **Aggregate** | **Method** | **SiO₂ [wt%]** | **Al₂O₃ [wt%]** | **CaO [wt%]** | **MgO [wt%]** | **FeO [wt%]** | **Optical basicity** |
|---|---|---|---|---|---|---|---|
| **Ladle** | Old | 5.3 | 20.9 | 36.2 | 9.4 | 19.5 | **0.80** |
| **slag** | New | 10.3 | 18.9 | 36.0 | 4.4 | 19.5 | **0.78** |
| **Tundish** | Old | 19,6 | 34.1 | 42.3 | 3.8 | 0 | **0.70** |
| **slag** | New | 32.8 | 28.4 | 16.6 | 2.3 | 0 | **0.60** |
| **mould** | Old | 33.7 | 8.1 | 38.9 | 4.8 | 0 | **0.68** |
| **slag** | New | 38.6 | 8.1 | 33.0 | 4.8 | 0 | **0.65** |

| | | | | | | | |
|---|---|---|---|---|---|---|---|
| Tables 1 and 2 give an overview of the materials used hitherto and of the optical basicity thereof (old) and state the changes which lead to a reduction in the optical basicity (new). As a result, spinel formation and growth can be reduced. | | | | | | | |

## Claims

1. Method for the metallurgical treatment of aluminium-killed steels to be cast continuously to reduce surface defects in the end product, comprising the following steps:
- in a preparation phase:
• installation of refractory materials of suitable oxidic composition onto the vessels used for the metallurgical treatment with oxides, which are selected such that the oxides contained in the refractory materials have a basicity which is less than the basicity of the oxides in the steel to be cast so that an acidic reaction of the spinels is minimized.
- during the metallurgical treatment:
• holding the temperature of the liquid steel as long as possible within a temperature range above 1600°C during the metallurgical treatment,
• addition of a limited amount of aluminium at a temperature above 1600°C,
• while a feed of oxygen is prevented to minimise the new formation of spinels,
• slag conditioning in a way that the slag composition is adapted such that the basicity of these slags is less than the basicity of the oxides contained in the steel to be cast,
• whereby an acidic reaction of the spinels is minimised,
• while simultaneously minimising the treatment time between the end of tapping and the start of casting.

2. Method for metallurgical treatment according to claim 1, **characterised in that** during the slag conditioning the slag is partly or completely renewed as required.

3. Method for metallurgical treatment according to either claim 1 or claim 2, **characterised in that** the basicity of the refractory materials of all the vessels through which the steel melt passes during the metallurgical treatment is substantially the same.

4. Method for the metallurgical treatment of silicon-killed steels to be cast continuously to reduce surface defects in the end product, comprising the following steps:
- in a preparation phase:
• installation of refractory materials of suitable oxidic composition onto the vessels used for the metallurgical treatment, which are selected such that the oxides contained in the refractory materials have a basicity which is less than the basicity of the oxides in the steel to stop the growth of orthosilicates in the subsequent metallurgical treatment,
- during the metallurgical treatment:
• after tapping, addition of a suitable deoxidant for partial or complete bonding of dissolved oxygen in the liquid steel,
• addition of a silicon-containing alloying agent, resulting in a change of the basicity of the oxides in the steel from basic to acidic to thereby disintegrate the spinels formed up until then into simple oxides,
• while preventing further influx of oxygen into the liquid steel,
• slag conditioning in such a way that
o acidic slags are used in relation to the basicity of the silicon oxide dissolved in the steel,
o the concentration gradient of the orthosilicate between melt and slag is of an appropriate magnitude to ensure an effective uptake into the slag,
• while simultaneously minimising the treatment time between the end of tapping and the start of casting.

5. Method for metallurgical treatment according to claim 4, **characterised in that** the deoxidant is aluminium and/or carbon.

6. Method for metallurgical treatment according to either claim 4 or 5, **characterised in that** the saturated slags are partly or completely replaced during the treatment.

## Patentansprüche

1. Verfahren zur metallurgischen Behandlung von Aluminium-beruhigtem Stahl für Stranggiessen zur Verminderung von Oberflächendefekten bei einem Endprodukt, wobei das Verfahren die folgenden Schritte umfasst:
- in einer Vorbereitungsphase:
• Installation von feuerfesten Materialien mit einer geeigneten oxidischen Zusammensetzung in die für die metallurgische Behandlung mit Oxiden verwendeten Gefäße, wobei die feuerfesten Materialien derart ausgewählt werden, dass die in den feuerfesten Materialien enthaltenen Oxide eine Basizität aufweisen, die geringer ist als die Basizität der Oxide in dem Stahl, der gegossen werden soll, so dass eine saure Reaktion der Spinelle auf ein Minimum reduziert wird,
- während der metallurgischen Behandlung:
• Halten der Temperatur des flüssigen Stahls so lange wie möglich in einem Temperaturbereich oberhalb von 1600 °C während der metallurgischen Behandlung,
• Hinzufügen einer begrenzten Menge von Aluminium bei einer Temperatur von über 1600 °C,
• während eine Zufuhr von Sauerstoff verhindert wird, um die Neubildung von Spinellen auf ein Minimum zu reduzieren,
• Schlackenkonditionieren derart, dass die Schlackenzusammensetzung so angepasst wird, dass die Basizität der Schlacken geringer ist als die Basizität der in dem Stahl enthaltenen Oxide, der gegossen werden soll,
• wobei eine saure Reaktion der Spinelle auf ein Minimum reduziert wird,
• während gleichzeitig zwischen dem Ende des Abstechens und dem Beginn des Gießens die Behandlungszeit auf ein Minimum reduziert wird.

2. Verfahren zur metallurgischen Behandlung gemäß Anspruch 1, **dadurch gekennzeichnet, dass** während der Schlackenkonditionierung die Schlacke je nach Bedarf zum Teil oder vollständig erneuert wird.

3. Verfahren zur metallurgischen Behandlung gemäß Anspruch 1 oder Anspruch 2, **dadurch gekennzeichnet, dass** die Basizität der feuerfesten Materialien in allen Gefäßen, durch welche die Stahlschmelze während der metallurgischen Behandlung hindurchfließt, im Wesentlichen gleich ist.

4. Verfahren zur metallurgischen Behandlung von Silizium-beruhigtem Stahl für Stranggiessen zur Verminderung von Oberflächendefekten bei einem Endprodukt, das Verfahren umfassend die folgenden Schritte:
- in einer Vorbereitungsphase:
• Installation von feuerfesten Materialien mit einer geeigneten oxidischen Zusammensetzung in die für die metallurgische Behandlung verwendeten Gefäße, wobei die feuerfesten Materialien derart ausgewählt werden, dass die in den feuerfesten Materialien enthaltenen Oxide eine Basizität aufweisen, die geringer ist als die Basizität der Oxide in dem Stahl, um das Wachstum von Orthosilikaten während der nachfolgenden metallurgischen Behandlung zu stoppen,
- während der metallurgischen Behandlung:
• nach dem Abstechen Hinzufügen eines geeigneten Desoxidationsmittels zum teilweisen oder vollständigen Binden von gelöstem Sauerstoff in dem flüssigen Stahl,
• Hinzufügen eines siliziumhaltigen Legierungsmittels, was in einer Veränderung der Basizität der Oxide in dem Stahl von basisch zu sauer resultiert, um dadurch die bis zu diesem Zeitpunkt gebildeten Spinelle in einfache Oxide aufzulösen,
• während ein weiterer Zustrom von Sauerstoff in den flüssigen Stahl verhindert wird,
• Schlackenkonditionieren derart, dass
o saure Schlacken in Relation zu der Basizität des in dem Stahl aufgelösten Siliziumoxids verwendet werden,
o der Konzentrationsgradient der Orthosilikate zwischen Schmelze und Schlacke eine angemessene Größe aufweist, um eine effektive Aufnahme in die Schlacke zu gewährleisten,
• während gleichzeitig zwischen dem Ende des Abstechens und dem Beginn des Gießens die Behandlungszeit auf ein Minimum reduziert wird.

5. Verfahren zur metallurgischen Behandlung gemäß Anspruch 4, **dadurch gekennzeichnet, dass** es sich bei dem Desoxidationsmittel um Aluminium und/oder Kohlenstoff handelt.

6. Verfahren zur metallurgischen Behandlung gemäß Anspruch 4 oder Anspruch 5, **dadurch gekennzeichnet, dass** die gesättigten Schlacken während der Behandlung zum Teil oder vollständig ersetzt werden.

## Revendications

1. Procédé de traitement métallurgique d'aciers calmés à l'aluminium devant être coulés en continu afin de réduire les irrégularités de surface dans le produit final, comprenant les étapes suivantes :
- au cours d'une phase de préparation :
• installation de matières réfractaires, présentant une composition oxydique appropriée, dans les cuves servant au traitement métallurgique avec des oxydes, ces dernières étant choisies de manière que les oxydes contenus dans les matières réfractaires présentent une basicité inférieure à la basicité des oxydes de l'acier destiné à être coulé pour ainsi réduire à un minimum une réaction acide des spinelles,
- au cours du traitement métallurgique :
• maintien de la température de l'acier liquide aussi longtemps que possible dans une plage de températures supérieure à 1600 °C au cours du traitement métallurgique,
• ajout d'une quantité limitée d'aluminium à une température supérieure à 1600 °C,
• pendant lequel tout apport d'oxygène est bloqué afin de réduire à un minimum toute nouvelle formation de spinelles,
• conditionnement du laitier de manière que la composition du laitier est adaptée pour que la basicité de ces laitiers soit inférieure à la basicité des oxydes contenus dans l'acier destiné à être coulé,
• en réduisant ainsi à un minimum la réaction acide des spinelles,
• tout en réduisant simultanément à un minimum le temps de traitement entre la fin du soutirage et le début de la coulée.

2. Procédé de traitement métallurgique selon la revendication 1, **caractérisé en ce que**, pendant le conditionnement du laitier, le laitier est partiellement ou complètement renouvelé, au besoin.

3. Procédé de traitement métallurgique selon la revendication 1 ou la revendication 2, **caractérisé en ce que** la basicité des matières réfractaires de toutes les cuves par lesquelles passe l'acier en fusion au cours du traitement métallurgique est sensiblement la même.

4. Procédé de traitement métallurgique d'aciers calmés au silicium devant être coulés en continu afin de réduire les irrégularités de surface dans le produit final, comprenant les étapes suivantes :
- au cours d'une phase de préparation :
• installation de matières réfractaires, présentant une composition oxydique appropriée, dans les cuves servant au traitement métallurgique, choisies de manière que les oxydes contenus dans les matières réfractaires présentent une basicité inférieure à la basicité des oxydes de l'acier afin d'interrompre la croissance d'orthosilicates au cours du traitement métallurgique subséquent,
- au cours du traitement métallurgique :
• après le soutirage, ajout d'un désoxydant approprié pour une fixation partielle ou complète de l'oxygène dissous de l'acier liquide,
• ajout d'un agent d'alliage contenant du silicium, provoquant une modification de la basicité des oxydes de l'acier, de basique à acide, pour ainsi désintégrer en oxydes simples les spinelles formées jusqu'alors,
• tout en bloquant l'entrée d'oxygène supplémentaire dans l'acier liquide,
• conditionnement du laitier de manière que
o des laitiers acides sont mis en oeuvre eu égard à la basicité de l'oxyde de silicium dissous de l'acier,
o le gradient de concentration de l'orthosilicate entre le métal liquide et le laitier est d'une grandeur appropriée permettant de garantir une absorption dans le laitier,
• tout en réduisant simultanément à un minimum le temps de traitement entre la fin du soutirage et le début de la coulée.

5. Procédé de traitement métallurgique selon la revendication 4, **caractérisé en ce que** le désoxydant est de l'aluminium et/ou du carbone.

6. Procédé de traitement métallurgique selon la revendication 4 ou la revendication 5, **caractérisé en ce que** les laitiers saturés sont partiellement ou totalement remplacés au cours du traitement.
